# EUROPÄISCHE PATENTANMELDUNG

(11) **EP 0 633 552 A2**
(43) Veröffentlichungstag der Anmeldung: **11.01.1995**
(21) Anmeldenummer: 94109714.9
(22) Anmeldetag: 23.06.1994
(51) Int. Cl.: G07C 5/00, G09B 19/16

(54) **System zur Auswertung der Fahrbetriebsweise eines Kraftfahrzeuges**

(30) Priorität: 05.07.1993 DE 4322327
(71) Anmelder: AUDI AG, D-85045 Ingolstadt (DE)
(72) Erfinder: Wiedner, Wilfried, A-6064 Rum (AT)
(74) Vertreter: Geissler, Manfred

(57) **Zusammenfassung**

Es wird ein System zur Auswertung der Fahrbetriebsweise eines Kraftfahrzeugs beschrieben, welches im Kraftfahrzeug angeordnete Sensoren zur Ermittlung von Fahrbetriebszuständen des Kraftfahrzeugs sowie eine vom Fahrzeug getrennte Auswerteeinheit mit einem Rechner aufweist, der aus den Sensorsignalen hergeleitete Fahrbetriebszustandssignale ausliest und einem Speicher und/oder einer Anzeigeeinheit zuführt. Die Sensoren sind an einen Encoder angeschlossen, welcher die Sensorsignale in einen seriellen Datenstrom wandelt, der einem fahrzeugfesten Sender zugeführt wird. Ein vom Fahrzeug getrennter Empfänger empfängt die Sendesignale und führt sie einem Decoder zu, der aus dem seriellen Datenstrom die Sensorsignale rekonstruiert und der Auswerteeinheit zuführt. Vorteilhafterweise erfaßt wenigstens ein Sensor markante Streckenmerkmale und ein weiterer Sensor medizinisch relevante Daten des Fahrers bzw. der Fahrerin des Kraftfahrzeugs, so daß "online" eine vollständige Analyse der Fahrt möglich ist.

## Beschreibung

Die Erfindung betrifft ein System zur Auswertung der Fahrbetriebszustände eines Kraftfahrzeugs gemäß dem Obergebriff des Hauptanspruchs.

Ein soches System ist aus der DE OS 31 46 711 bekannt. Dabei berechnet der Rechner eine Vielzahl von die jeweiligen Fahrbetriebszustände des Kraftfahrzeugs repräsentierenden Werten auf Basis der Ausgangssignale der Sensoren und führt eine Steuerung zur Erzeugung eines Warnsignals durch, wenn einer der Werte einem aus einer Vielzahl vorgegebener Sollwerte entspricht. Der Akkumulationswert der Warnsignale und die Gründe für die Warnsignale werden in einer externen Speichereinheit abgespeichert, die nach Fahrtende demontiert wird. Auf diese Weise läßt sich das Fahrverhalten des Fahrers im Nachhinein ermitteln und nötigenfalls korrigieren.

Aus der DE OS 27 28 362 ist ein Datenverarbeitungssystem für Fahrdaten insbesondere von Schienenfahrzeugen bekannt, bei dem die im Fahrzeug aufgezeichneten Fahrdaten an ein vom Fahrzeug entferntes Speichermedium gegeben werden, in dem sie umgewandelt werden. Die umgewandelten Daten werden in einen Rechner eingegeben und dort mit ein bekanntes Leistungsprofil darstellenden Stammdaten unter Steuerung eines Programms zur Ableitung analytischer Ergebnisse hinsichtlich der Fahrleistung verglichen. Die Aufzeichnung der Fahrdaten erfolgt mittels versiegelter Patronen, die ein Endlosband enthalten und beispielsweise in eine Aufzeichnungseinheit an Bord einer Lokomotive eingesteckt werden. Die Patrone wird nach Aufzeichnung der Information aus der Lokomotive herausgenommen und in eine Wiedergabeeinheit eingesteckt.

In neuerer Zeit kommt zur Unfallvorbeugung der Fahrerausbildung steigende Bedeutung zu. Viele Firmen, Automobilclubs und öffentliche Einrichtungen haben Fahr-und Sicherheitskurse eingerichtet, in denen, getrennt vom öffentlichen Verkehr, kritische Fahrsituationen geübt werden können, so daß diese dann in der Praxis, wo man häufig ungewollt mit solchen Situationen konfrontiert ist, besser beherrscht werden. Ein wichtiger Bestandteil solcher Trainingkurse liegt darin, mit dem Fahrer/der Fahrerin die durchfahrenen Situationen diskutieren zu können, um gegebenenfalls auf Fehler oder Verbesserungsmöglichkeiten aufmerksam machen zu können. Dies soll in möglichst enger zeitlicher Folge mit den durchfahrenen Situationen und möglichst realistisch geschehen, da dadurch der Lerneffekt positiv beeinflußt wird. Bekannte Systeme haben den Nachteil, daß der an Bord des Fahrzeugs befindliche Datenspeicher nach Fahrtbeendigung entnommen und zur Auswertung in ein Auswertegerät gebracht werden muß. Dadurch geht wertvolle Zeit verloren und ist eine Instruktion des Fahrers/der Fahrerin bereits während der Fahrt nicht möglich.

Der Erfindung liegt die Aufgabe zugrunde, ein insbesondere für die Anwendung bei Fahr- und Sicherheitstrainings geeignetes System zur Auswertung der Fahrbetriebsweise eines Kraftfahrzeugs zu schaffen, welches eine effiziente Schulung der Fahrer/Fahrerinnen gestattet.

Diese Aufgabe wird bei einem gattungsgemäßen System zur Auswertung der Fahrbetriebsweise eines Kraftfahrzeugs mit den kennzeichnenden Merkmalen des Hauptanspruchs gelöst.

Dadurch, daß bei dem erfindungsgemäßen System die Sensorsignale bereits während der Fahrt des Fahrzeugs an einen vom Fahrzeug getrennten Empfänger gesendet werden, der ortsfest oder in einem Begleitfahrzeug untergebracht sein kann, und dort unmittelbar "online" oder im Nachhinein ausgewertet werden können, ist eine sofortige zielgerichtete Instruktion des Fahrers/der Fahrerin möglich, bereits während der Fahrt durch Handzeichen, durch Funkanweisungen oder unmittelbar nach der Fahrt, wo das Erinnerungsvermögen des gerade Gefahrenen noch frisch ist.

Mit den Merkmalen des Anspruchs 2 wird erreicht, daß die Fahrzeugbetriebsdaten unmittelbar der jeweiligen Streckenposition zugeordnet werden können, was für die Schulung besonders vorteilhaft ist, da die jeweilige Situation komplett nachvollzogen und Fehler entsprechend analysiert werden können.

Mit den Merkmalen des Anspuchs 3 wird erreicht, daß sich den jeweiligen Situationen zusätzlich medizinisch relevante Daten des Fahrers/der Fahrerin des Kraftfahrzeugs zuordnen lassen, was sowohl für die Erklärung bestimmter Verhaltensweisen alsauch generell für Aussagen über den Zustand und die Belastungsfähigkeit des Fahrers/der Fahrerin wichtig ist.

Selbstverständlich können auch bei dem erfindungsgemäßen System Einrichtungen vorgesehen sein, die in bestimmten Situationen Warnsignale erzeugen, beispielsweise, wenn zu stark gebremst wird, wenn ein Geschwindigkeitslimit überschritten wird oder wenn eine bestimmte Pulsfrequenz oder ein Blutdruck überschritten wird.

Die Erfindung wird im folgenden anhand schematischer Zeichnungen beispielsweise und mit weiteren Einzelheiten erläutert. Alle Figuren stellen Blockschaltbilder dar und zwar
Fig 1 das Gesamtsystem.
Fig. 2 den Encoder ,
Fig. 3 die Signalaufbereitungseinrichtung,
Fig. 4 einen Frequenz-/Spannungswandler,
Fig 5 ein analoges Mutterbord,
Fig. 6 ein weiteres analoges Mutterbord,
Fig. 7 ein Digitalbord und
Fig. 8 ein Pulscodemodulationsbord.

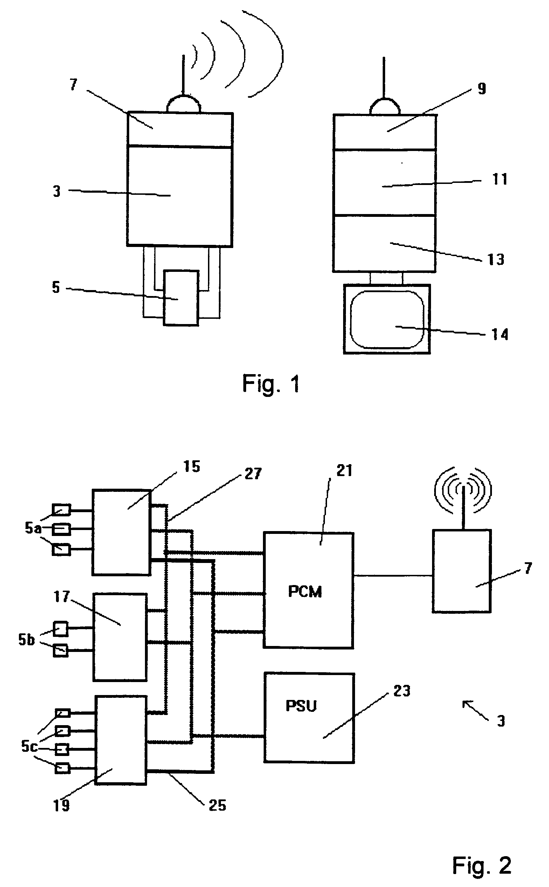

Gemäß Fig. 1 gehört zum System ein in einem Kraftfahrzeug angeordneter Encoder 3, der von Sensoren 5 erzeugte Signale in geeignete Form bringt, damit diese von einem Sender 7 gesendet werden können. Weiter gehört im dargestellten Beispiel zum System ein Empfänger 9, der die Signale des Senders 7 empfängt und an einen Decoder 11 weiterleitet, welcher die in den Sendesignalen enthaltenen Sensorsignale decodiert und an einen Rechner 13 weiterleitet, welcher die Sensorsignale zur Anzeige durch einen Bildschirm 14 und/oder zur Speicherung beispielsweise auf Festplatte oder Diskette aufbereitet.

Die Sensoren 5 können beispielsweise den Bremsdruck, die Längsbeschleunigung, die Querbeschleunigung, die Raddrehzahlen aller vier Fahrzeugräder, die Drehbewegung des Lenkrades, den Kupplungspedalweg, die Drosselklappenstellung, die Motordrehzahl und die Schaltstellung des Getriebes erfassen. Weiter kann ein Sensor vorgesehen sein, welcher an der Fahrbahn aufgestellte Pylonen erkennt. Am Fahrer bzw. der Fahrerin können Sensoren angebracht sein, welche die Pulsfrequenz oder den Blutdruck oder sonstwelche physiologisch relevanten Werte erfassen.

Die Sensordaten werden für eine besonders hohe Betriebssicherheit des Systems digitalisiert und per Funkstrecke an eine Bodenstation mit dem Empfänger 9 und den weiteren Einheiten geleitet. Dort können sie aufgezeichnet oder "online" betrachtet werden.

Nach dem Abfahren der Teststrecke kann jeder Trainingsteilnehmer mit seinem Betreuer die unmittelbar vorhergegangene Fahrt komplett durchgehen und auf dem Bildschirm14 oder an Hand eines Ausdruckes der Bildschirmdarstellung auf seine Fehler bzw. Verbesserungsmöglichkeiten hingewiesen werden.

Bei längeren Trainingsfahrten können die Fehler auch bereits "online" durch geschulte Personen am Bildschirm ausgewertet und dem Trainierenden unmittelbar durch Handzeichen, per Funk oder während eines Stops mitgeteilt werden.

Die Grundfunktion des Systems ist derart, daß die meist in analoger Form als Spannungen vorliegenden Sensorsignale in ein digitales Wort gewandelt werden. Die Worte aller Meßkanäle werden zu einem seriellen Datenstrom zusammengestellt, der ggfs. nach nochmaliger Umwandlung zur Erhöhung der Fehlersicherheit nach einer bestimmten Modulationsvorschrift auf eine Trägerfrequenz aufgesetzt und gesendet wird.

Fig. 2 zeigt den Encoder 3.

Entsprechend den unterschiedlichen zu erfassenden Werten haben die Sensoren unterschiedliche Ausgangssignale. Eine erste Gruppe von Sensoren 5a enthält Widerstandsbrückenschaltungen und liefert als Signal eine analoge Ausgangsspannung. Solche Sensoren dienen beispielsweise zur Erfassung des Bremsdruckes (an eine Membran angeschlossener Dehnungsmeßstreifen) oder des Lenkwinkels (Wegepotentiometer). Diese erste Gruppe von Sensoren 5a ist an ein analoges Mutterbord 15 angeschlossen.

Eine zweite Gruppe von Sensoren 5b liefert digitale Signale, beispielsweise Mikroschalter zur Erkennung der Schaltstellung des Getriebes oder Reflexionslichtschranken zur Erkennung von an Pylonen angebrachten Reflektoren. Diese Sensoren sind an ein Digitalbord 17 angeschlossen.

Eine dritte Gruppe von Sensoren 5c liefert die zu erfassenden Meßwerte in an sich bekannter Weise in Form von Signalfrequenzen, beispielsweise Raddrehzahlsensoren , der Beschleunigungssensor ( Verstimmung eines Schwingkreises) oder der Pulsfrequenzsensor. Diese Sensoren 5c sind an ein weiteres analoges Mutterbord 19 angeschlossen.

Die genannten Bords 15,17 und 19 sowie ein Pulscodemodulationsbord 21 (PCM) werden von einer Strom-bzw.Spannungsversorgungseinheit 23 (PSU) mit den benötigten Versorgungsspannungen +15 V, - 15 V und + 5 V versorgt, die bei Speisespannungen von 9 V bis 36 V erzeugt werden. Eingangs- und Ausgangsmasse der Einheit 23 sind galvanisch getrennt, sodaß keine leitende Verbindung zwischen der Kraftfahrzeug-Masse und der Elektronik-Masse besteht. Adressbus 25 und ein Datenbus 27 verbinden die Bords 15, 17 und 19 mit dem Pulscodemodulationsbord 21.

Der Sender 7 ist sythesizergesteuert und hat im Anwendungsbeispiel eine Leistung von 250 mW. Eine Änderung der Trägerfrequenz (beispielsweise 440,625 MHz) erfogt erforderlichenfalls durch Austausch der programmierten Microcontroller. Als Antenne wird ein Dipol mit Magnetfuß oder fest am Kraftfahrzeug befestigt. Die elektrische Länge der Antenne beträgt ein Viertel der Wellenlänge.

Die Empfangs- und Auswertestation mit dem Empfänger 9, dem Decoder 11, dem Rechner 13 und dem Bildschirm 14 sowie einer nicht dargestellten Speichereinheit werden im einzelnen nicht beschrieben, da an sich bekannt. Es kann ein üblicher Personalcomputer mit Peripherie verwendet werden.

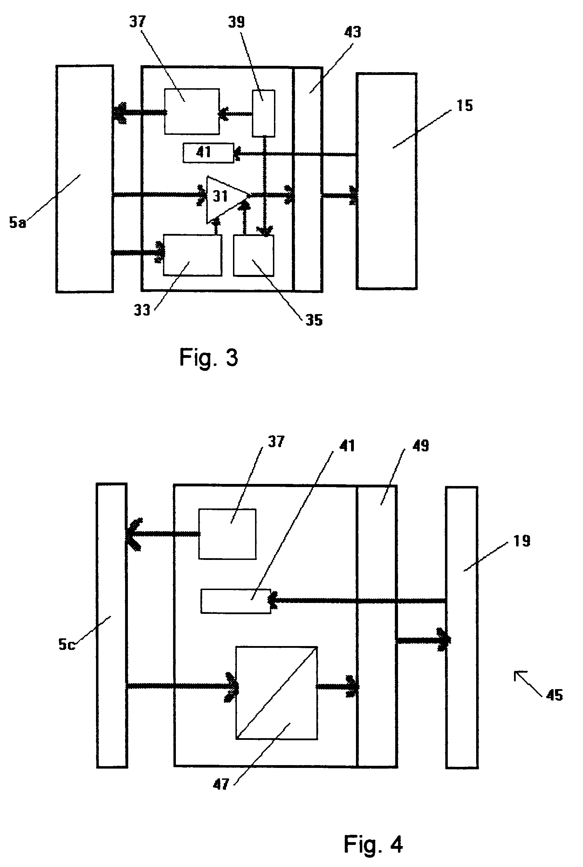

Fig.3 zeigt eine Signalaufbereitungsschaltung 29 , wie sie jedem der Sensoren 5a zugeordnet ist. Die Aufgabe der Signalaufbereitungsschaltung 29 besteht darin, die Signale der Sensoren 5a so aufzubereiten, daß diese anschließend problemlos digitalisiert werden können. Dazu enthält die Signalaufbereitungsschaltung 29 einen Instrumentierungsverstärker 31, welcher das häufig schwache Meßsignal streng linear verstärkt. Im Meßsignal bestehende oder durch die Verstärkung entstehende Offset Spannungen werden in an sich bekannter Weise dynamisch (dynamischer Offset 33) und statisch (statischer Offset 35) unterdrückt. Die Spannungsversorgung der Sensoren erfolgt mittels einer präzisen Brückenversorgung 37, welche an eine Referenzspannungsquelle 39 angeschlossen ist. Weitere Spannungen werden von einer Spannungsquelle 41 zur Verfügung gestellt. Um unerwünschte hochfrequente Signalanteile zu unterdrücken, ist der Ausgang des Instrumentenverstärkers 31 über ein 6-poliges Tiefpaßfilter mit dem analogen Mutterbord 15 verbunden.

Fig. 4 zeigt einen Frequenz-/Spannungswandler 45, wie er jedem der Sensoren 5c zugeordnet ist, deren Meßsignal ein Frequenzsignal ist, welches in ein analoges Spannungssignal umgewandelt wird. Zur Spannungsver-sorgung jedes Sensors 5c dient wiederum eine Brückenversorgung 37. Die eigentliche, wie an sich bekannt aufgebaute Frequenz-/Spannungs-wandlereinheit 47 ist zur Unterdrückung unerwünschter Signale wiederum über ein Tiefpaßfilter mit dem weiteren analogen Muterbord 19 verbunden.

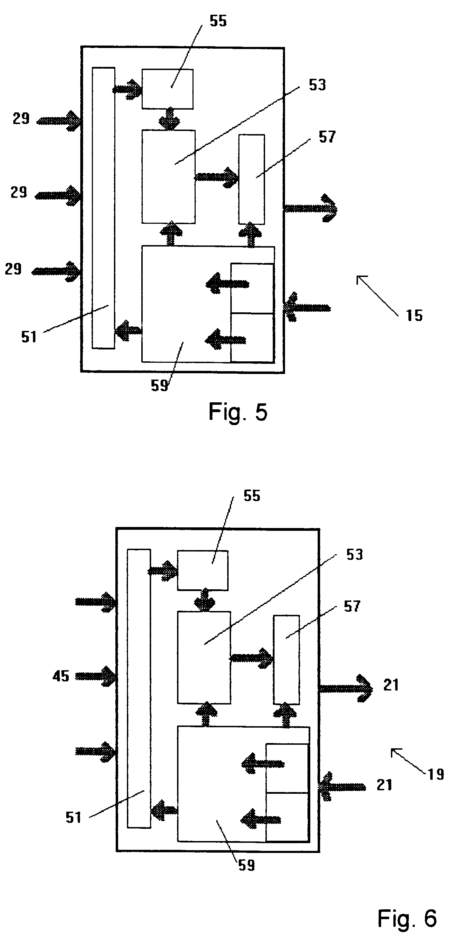

Fig. 5 zeigt das analoge Mutterbord 15. Dieses Bord dient der Meßsignalerfassung aller Signalaufbereitungsschaltungen 29. Jede der analogen Signalspannungen wird über einen 8-Kanal Multiplexer 51 zur Digitalisierung an einen Analog/Digital Wandler 53 geliefert., von dem aus die digitalen Datenwörter über den Datenbus an das Pulscodemodulationsbord 21 gehen. Die Fg. 5 zeigt deutlich, daß das analoge Mutterbord 15 in fünf Funktionsblöcke unterteilt werden kann, nämlich den 8-Kanalmultiplexer 51, einen diesem nachgeschalteten Impedanzwandler 55, der mit dem Analog/Digital Wandler 53 verbunden ist, sowie dem Wandler nachgeschaltet Ausgangsschalter 57 (drei Zustände), die die Digitalwörter auf den Systemdatenbus bringen, und eine Adreß-und Steuerlogik, die mit der Gesamtsteuerlogik auf dem Pulscodemodulationsbord 21 kommuniziert und Module bzw.Kanäle adressiert. Der Analog/Digital Wandler 53 enthält einen S&H Verstärker, der den analogen Meßwert für die Dauer der Digitalisierung speichert und zur Fehlervermeidung Änderungen der Signalspannung während der Wandlung unterdrückt. Das generierte, dem Spannungswert äquivalente Digitalwort hat eine Breite von 10 Bits. Der Impedanzwandler 55 dient dazu, die Signalspannungen mit einer sehr niedrigen Quellenspannung zu versehen, wodurch sie vom Wandler 55 besser verarbeitet werden können.

Fig.6 zeigt das den Frequenz-/Spannungswandlern 45 nachgeschaltete analoge Mutterbord 19, dessen Aufbau und Funktion dem bzw. der des Mutterbordes 15 entspricht.

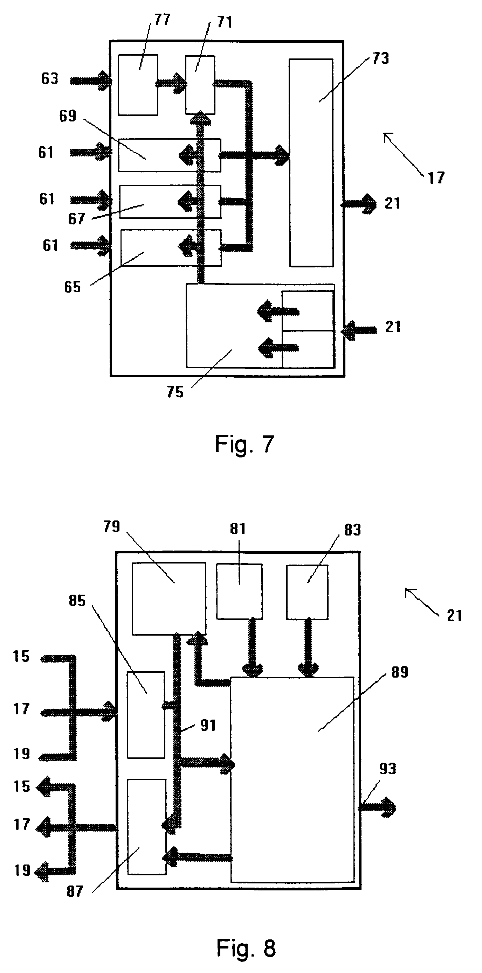

Fig. 7 zeigt das Digitalbord 17, welches zur Einspeisung von maximal vier digitalen 10-Bit Wörtern in den PCM-Datenstrom dient. Vom Digitalbord 17 gehen die 10-Bit breiten Digitalwörter über den Systemdatenbus zur Weiterverarbeitung an das Pulscodemodulationsbord 21. Das Digitalbord 17 kann in fünf Funktionsblöcke unterteilt werden, nämlich 3 Eingangskanäle 61 mit je 10 Bit (TTL-Pegel), ein Eingangskanal 63 mit 10 Bit (2V ... 12 V), 4-Kanal-Multiplexer mit Eingangsschaltern 65, 67, 69 und 71, Ausgangsschalter 73 (drei Zustände) sowie der Adreß-und Steuerlogik 75.

Im digitalen Eingang 63 mit 10 Bit Wortbreite für Daten mit einem Spannungspegel zwischen 2V und 12V ist dem Eingangsschalter 71 ein Komparator 77 vorgeschaltet, in dem die Eingänge mit über Potentiometer einstellbaren Schaltschwellen abgefragt werden. Der Multiplexer mit den Eingangsschaltern 65, 67, 69 und 71 schaltet alle 4 Digitalwörter in der richtigen Reihenfolge zu den Ausgangsschaltern 73.

Fig. 8 zeigt das Pulscodemodulationsbord 21, das sämtliche Module, die zum Einlesen der analogen und digitalen Größen dienen, mit Adressen und Steuersignalen versorgt. Als Input erhält das Pulscodemudulationsbord 21 einen 12 Bit breiten parallelen Datenstrom, der entsprechend der Puls Code Modulation in einen seriellen Datenstrom gewandelt werden. Es enthält in an sich bekannter Weise einen Speicher 79 für PCM Format, eine Reset-Einheit 81, einen Taktgeber 83, eine Dateneingangseinheit 85, eine Einheit 87 zum Erzeugen der Adreß-u. Steuersignale, den eigentlichen PCM-Generator 89 sowie den Daten-u. Adress Bus 91 und den Ausgang 93 für die seriellen PCM Daten. Die Funktion des Pulcodemodulationsbordes 21 ist wie an sich bekannt und wird daher nicht näher beschrieben.

## Patentansprüche

1. System zur Auswertung der Fahrbetriebsweise eines Kraftfahrzeugs, mit im Kraftfahrzeug angeordneten Sensoren zur Ermittlung von Fahrbetriebszuständen des Kraftfahrzeugs und einer Auswerteeinheit mit einem Rechner, welcher die aus den Sensorsignalen hergeleiteten Fahrbetriebszustandssignale ausliest und einem Speicher und/oder einer Anzeigeeinheit zuführt, gekennzeichnet durch
einen an die Sensoren(5; 5a, 5b, 5c ) angeschlossenen Encoder(3), welcher die Sensorsignale in einen seriellen Datenstrom wandelt, einen dem Encoder (3) nachgeschalteten Sender(7), welcher den seriellen Datenstrom an einen vom Fahrzeug getrennten Empfänger(9) sendet, und einen dem Empfänger(9) nachgeschalteten Decoder(11), welcher aus dem seriellen Datenstrom die Sensorsignale rekonstruiert und an die Auswerteeinheit(13,14) angeschlossen ist.

2. System nach Anspruch 1, dadurch gekennzeichnet, daß wenigstens ein Sensor (5b ) zur Erfassung markanter Fahrtstreckenmerkmale vorhanden ist und daß die Auswerteeinheit (13,14 ) auf einem Bildschirm(14) die die Fahrbetriebszustände des Kraftfahrzeugs darstellenden Signale in Zuordnung zu den Fahrtstreckensignalen anzeigt.

3. System nach Anspruch 1 oder 2, dadurch gekennzeichnet, daß wenigstens ein Sensor(5c) zur Erfassung medizinisch relevanter Daten des Fahrers/der Fahrerin des Kraftfahrzeugs vorhanden ist.
